(19) Europäisches Patentamt
European Patent Office
Office européen des brevets

(11) EP 3 796 430 B1

(12) # EUROPEAN PATENT SPECIFICATION

(45) Date of publication and mention of the grant of the patent:
**15.06.2022 Bulletin 2022/24**

(21) Application number: **18919185.1**

(22) Date of filing: **20.12.2018**

(51) International Patent Classification (IPC):
***H01M 4/131*** *(2010.01)* ***H01M 4/1391*** *(2010.01)*
***H01M 4/525*** *(2010.01)* ***H01M 4/62*** *(2006.01)*
***H01M 4/04*** *(2006.01)*

(52) Cooperative Patent Classification (CPC):
**H01M 4/0404; H01M 4/131; H01M 4/1391; H01M 4/525; H01M 4/62; H01M 4/622; H01M 4/623;** Y02E 60/10

(86) International application number:
**PCT/JP2018/047008**

(87) International publication number:
**WO 2019/220677 (21.11.2019 Gazette 2019/47)**

(54) **ELECTRODE MIXTURE, ELECTRODE MIXTURE PRODUCTION METHOD, ELECTRODE STRUCTURE, ELECTRODE STRUCTURE PRODUCTION METHOD, AND SECONDARY BATTERY**

ELEKTRODENGEMISCH, ELEKTRODENGEMISCHHERSTELLUNGSVERFAHREN, ELEKTRODENSTRUKTUR, ELEKTRODENSTRUKTURHERSTELLUNGSVERFAHREN UND SEKUNDÄRBATTERIE

MÉLANGE D'ÉLECTRODES, PROCÉDÉ DE PRODUCTION DE MÉLANGE D'ÉLECTRODES, STRUCTURE D'ÉLECTRODE, PROCÉDÉ DE PRODUCTION DE STRUCTURE D'ÉLECTRODE ET BATTERIE SECONDAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.05.2018 JP 2018094082**

(43) Date of publication of application:
**24.03.2021 Bulletin 2021/12**

(73) Proprietor: **Kureha Corporation**
**Chuo-ku**
**Tokyo 103-8552 (JP)**

(72) Inventors:
- **IGARASHI, Tamito**
  **Tokyo 103-8552 (JP)**
- **AOKI, Kenta**
  **Tokyo 103-8552 (JP)**
- **KOBAYASHI, Shota**
  **Tokyo 103-8552 (JP)**
- **SATO, Hiroshi**
  **Tokyo 103-8552 (JP)**

(74) Representative: **Novagraaf Group**
**Chemin de l'Echo 3**
**1213 Onex/ Geneva (CH)**

(56) References cited:
**WO-A1-2004/049475**
**WO-A1-2011/122261**
**WO-A1-2012/090876**
**WO-A1-2017/056974**
**WO-A1-2018/008263**
**JP-A- 2015 185 251**
**JP-A- 2016 066 529**
**JP-A- 2016 192 398**
**KR-A- 20160 149 042**

EP 3 796 430 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to an electrode mixture, and more specifically relates to an electrode mixture for a lithium-ion secondary battery.

### BACKGROUND ART

In recent years, there have been remarkable developments in electronic technology, and the functionality of miniature mobile devices has become increasingly advanced, which created a demand for smaller and lighter power supplies (to have higher energy density) for use in such devices. As batteries having high energy density, non-aqueous electrolyte secondary batteries such as lithium-ion secondary batteries are widely used.

An electrode for lithium-ion secondary batteries can be obtained, for example, by the following: First, an electrode mixture in the form of a slurry (hereinafter, also referred to as an electrode mixture slurry) is obtained by mixing powdery electrode materials such as an electrode active material and a conductive agent, which can be added as necessary, with a binder (binding agent) and dissolving or dispersing the mixed material in a suitable solvent. Subsequently, an electrode for lithium-ion secondary batteries can be obtained by coating a current collector with the obtained electrode mixture slurry, volatilizing the solvent, and forming a structure that is retained as an electrode mixture layer.

As to a technique to impart high energy density in lithium-ion secondary batteries, a technique to increase a charge/discharge capacity of a positive electrode active material itself in an electrode is used. As to the technique to increase the charge/discharge capacity of the positive electrode active material, it is known, for example, that a nickel-containing compound is used as a positive electrode active material. It is also known that the discharge capacity can be improved by using an electrode active material having an increased nickel ratio.

However, when the nickel ratio in the electrode active material increases, there is a problem that the electrode mixture slurry becomes prone to gelling.

Therefore, the electrode mixture has been developed for the purpose of suppressing the gelling of the electrode mixture slurry. As an example of such an electrode mixture, a negative electrode mixture for a non-aqueous electrolyte secondary battery containing a vinylidene fluoride-based polymer containing a polar group, a vinylidene fluoride-based polymer containing chlorine atoms, an electrode active material, and an organic solvent (Patent Document 1). Furthermore, as a positive electrode active material, a material containing a lithium-containing complex oxide having a specific composition containing nickel is used, and as the positive electrode binder, a binder containing polyvinylidene fluoride and a vinylidene fluoride-chlorotrifluoroethylene copolymer has also proposed (for example, Patent Document 2).

### CITATION LIST

Patent Document

Patent Document 1: WO 2010/074041
Patent Document 2: JP 2014-007088 A

### SUMMARY OF INVENTION

Technical Problem

In an electrode mixture using an electrode active material with an enhanced nickel ratio to improve the discharge capacity, a problem other than gelling was found that the electrode active material settles into a bottom portion of the container when the electrode mixture slurry is held for a period of time. When the electrode active material is settled, the solid content concentration of the electrode mixture increases so that the lower portion of the electrode mixture thickens, causing a deterioration of handleability during electrode production.

Therefore, the present invention is made in view of the above problems, and an objective thereof is to provide an electrode mixture having suppressed changes in the solid content concentration in a slurry.

### SOLUTION TO PROBLEM

In order to solve the problems described above, the electrode mixture according to the present invention

comprises an electrode active material and a binder composition, the electrode active material being provided on a current collector, and the binder composition binding the electrode active material to the current collector, wherein the binder composition comprises a vinylidene fluoride copolymer and an acrylic polymer, the vinylidene fluoride copolymer having a polar group, and the acrylic polymer having a structural unit derived from a monomer represented by Formula (1) below:

[Chem. 1]

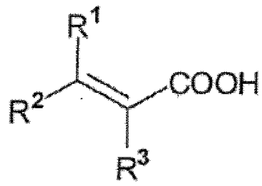

· · · (1)

(where $R^1$, $R^2$, and $R^3$ are each independently a hydrogen atom, a chlorine atom, a fluorine atom, an alkyl group having 1 to 6 carbon atoms, or a fluorine-substituted alkyl group having 1 to 6 carbon atoms), and the electrode active material comprises a lithium metal oxide represented by Formula (2) below:

$Li_{1+x}MO_2$ ... (2)

(where X is a number satisfying $-0.15 < X \leq 0.15$, M is Ni or a group of elements including two or more elements that include Ni, and when M is a group of elements including two or more elements that include Ni, M contains 50 mol% or more of Ni).

In order to solve the problems described above, a method of producing an electrode mixture according to the present invention comprises kneading a vinylidene fluoride copolymer, an acrylic polymer, and an electrode active material, the vinylidene fluoride copolymer having a polar group, the acrylic polymer having a structural unit derived from a monomer represented by Formula (1) below:

[Chem. 2]

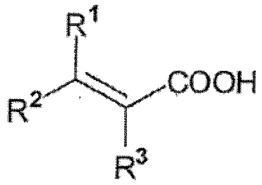

· · · (1)

(where $R^1$, $R^2$, and $R^3$ are each independently a hydrogen atom, a chlorine atom, a fluorine atom, an alkyl group having 1 to 6 carbon atoms, or a fluorine-substituted alkyl group having 1 to 6 carbon atoms), and the electrode active material including a lithium metal oxide represented by Formula (2) below:

$Li_{1+x}MO_2$ ... (2)

(where X is a number satisfying $-0.15 < X \leq 0.15$, M is Ni or a group of elements including two or more elements that include Ni, and when M is a group of elements including two or more elements that include Ni, M contains 50 mol% or more of Ni).

Advantageous Effects of Invention

According to the present invention, an electrode mixture with suppressed changes in the solid content concentration during storage of a slurry can be provided.

## BRIEF DESCRIPTION OF THE DRAWINGS

FIG. 1 is a cross-sectional view of an electrode structure according to an embodiment of the present invention.
FIG. 2 is an exploded perspective view of a secondary battery according to an embodiment of the present invention.

## DESCRIPTION OF EMBODIMENTS

An embodiment of the electrode mixture according to the present invention and the use thereof will be described. In the present specification, "to" is used to mean that the numerical values described therebefore and thereafter are included as the lower limit value and the upper limit value.

Electrode mixture

The electrode mixture according to the present embodiment includes an electrode active material that is provided on a current collector, and a binder composition for binding the electrode active material to the current collector, where the binder composition includes a vinylidene fluoride copolymer and an acrylic polymer. The electrode active material includes a lithium metal oxide represented by Formula (2) below:

$$Li_{1+x}MO_2 \ldots \qquad (2)$$

(where X is a number satisfying $-0.15 < X \leq 0.15$, M is Ni or a group of elements having two or more elements that include Ni, and when M is a group of elements having two or more elements that include Ni, M contains 50 mol% or greater of Ni).

Binder composition

A binder composition of the present embodiment is used as a binding agent to bind an electrode active material onto a current collector. As described above, the binder composition includes a vinylidene fluoride copolymer and an acrylic polymer.

The vinylidene fluoride copolymer of the present embodiment is a vinylidene fluoride copolymer having a polar group, and it is a copolymer of vinylidene fluoride and a polar group-containing compound.

The polar group-containing compound is, for example, a compound containing a polar group such as a carboxyl group, an epoxy group, a hydroxyl group, and a sulfonic acid group. Among them, the polar group-containing compound is preferably a compound containing a carboxyl group. In other words, the polar group in the vinylidene fluoride copolymer having a polar group is preferably a carboxyl group. When the vinylidene fluoride copolymer has a polar group, particularly a carboxyl group, favorable binding properties between the electrode active material and the current collector or electrode active material can be obtained.

Examples of the compound having a carboxyl group include acrylic acid, an acrylic acid derivative, monomethyl maleate, and monoethyl maleate. Examples of the acrylic acid derivative include compounds represented by Formula (3) below:

[Chem. 3]

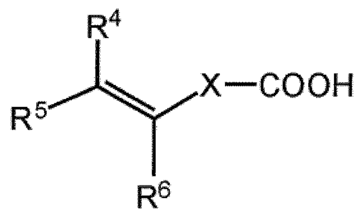

・・・ (3)

In Formula (3), $R^4$, $R^5$ and $R^6$ are each independently a hydrogen atom, or an alkyl group having from 1 to 5 carbon atoms. From the viewpoint of polymerization reactivity, particularly, $R^4$ and $R^5$ are desired to be substituents having small steric hindrance, preferably a hydrogen or an alkyl group having from 1 to 3 carbon atoms, and preferably a hydrogen or a methyl group.

In Formula (3), X is an atomic group including 1 to 20 atoms in its main chain and having a molecular weight of 500 or less. The molecular weight in the atomic group is preferably 200 or less. Although the lower limit of the molecular weight of the atomic group is not particularly limited, it is normally about 15. When the molecular weight of the atomic group is within the range described above, the peel strength of the electrode mixture layer to be obtained using the

subject electrode mixture is suitably increased. Note that the "number of atoms in the main chain" means, the number of atoms of a backbone moiety in a chain in which a carboxyl group described on the right of X in the above Formula (3) and a group ($R^3R^4C=CR^5$-) described on the left of X are connected via a minimum number of atoms. X may also be branched by including a functional group as a side chain. In a case where X has a side chain, X may have one side chain or a plurality of side chains.

Furthermore, X in Formula (3) is preferably a structure represented by Formula (4) below:

-COO-X'-... (4)

In Formula (4), X' is an atomic group having a molecular weight of 456 or less in which the main chain has 1 to 18 atoms; however, from the viewpoint of polymerizability, an atomic group in which the main chain has 1 to 13 atoms is preferable, and an atomic group in which the main chain has 1 to 8 atoms is more preferable. The molecular weight of the atomic group represented by X' is preferably 156 or lower. Although the lower limit of the molecular weight of the atomic group represented by of X' is not particularly limited, it is normally about 14. The number of atoms in the main chain does not include the number of hydrogen atoms.

Specific examples of the compound containing a carboxyl group include acrylic acid, 2-carboxyethyl acrylate, 2-carboxyethyl methacrylate, acryloyloxy ethyl succinate, acryloyloxy propyl succinate, and monomethyl maleate, and monoethyl maleate.

In the vinylidene fluoride copolymer having a polar group according to the present embodiment, it is preferable to have from 0.01 to 10 mol%, more preferable to have from 0.20 to 7 mol%, and particularly preferable to have from 0.30 to 4 mol% of the structural units derived from the polar group-containing compound. Furthermore, the vinylidene fluoride copolymer preferably has from 90 to 99.99 mol%, more preferably from 93 to 99.75 mol%, and particularly preferably from 96 to 99.63 mol% of the structural units derived from vinylidene fluoride. In a case where the content of the structural units derived from the polar group-containing compound is 0.01 mol% or greater, the proportion of the polar group in the electrode mixture slurry does not become too small, and the effect of enhancing the peel strength of the electrode mixture layer to be obtained using the electrode mixture can be achieved. Furthermore, in a case where the content of the structural units derived from the polar group-containing compound is 10 mol% or lower, the viscosity of the electrode mixture slurry does not become too high, allowing the difficulties in the application of the electrode mixture slurry to be avoided.

The amount of the vinylidene fluoride unit of vinylidene fluoride copolymer and the amount of the unit of the polar group-containing compound can typically be determined by the $^1H$ NMR spectrum of the copolymer or by neutralization titration.

The vinylidene fluoride copolymer in the present embodiment may also include components of monomers other than the vinylidene fluoride and a polar group-containing compound. Examples thereof include a fluorine-based monomer copolymerizable with vinylidene fluoride, a hydrocarbon monomer such as ethylene and propylene, and an alkyl (meth)acrylate compound represented by (meth)acrylic acid and methyl (meth)acrylate. Examples of fluorine-based monomers that are copolymerizable with vinylidene fluoride include vinyl fluoride, trifluoroethylene, tetrafluoroethylene, chlorotrifluoroethylene, hexafluoropropylene, perfluoroalkyl vinyl ethers represented by perfluoromethyl vinyl ether, and the like.

In a case where the vinylidene fluoride copolymer of the present embodiment has other monomers described above, it is preferable to have from 0.01% to 10 mol% of the other monomer units.

The vinylidene fluoride copolymer in the present embodiment can be obtained by polymerizing vinylidene fluoride and a polar group-containing compound by a known method. The polymerization method is not particularly limited, and examples thereof include suspension polymerization, emulsion polymerization, and solution polymerization. Among these, from the perspective of ease of post-treatment and the like, the polymerization method is preferably a suspension polymerization or emulsion polymerization of a water-based system. In addition, as the vinylidene fluoride and polar group-containing compound used in copolymerization, common commercially available products may be used.

The vinylidene fluoride copolymer in the present embodiment has a weight average molecular weight measured by gel permeation chromatography (GPC) from 50000 to 1500000.

The inherent viscosity $\eta_i$ of the vinylidene fluoride copolymer of the present embodiment is preferably from 0.5 dl/g to 5.0 dl/g, more preferably from 1.0 dl/g to 4.5 dl/g, and even more preferably from 1.5 dl/g to 4.0 dl/g. The inherent viscosity is preferably in this range so that electrodes can be easily produced without the occurrence of productivity deterioration due to a reduction in the electrode mixture slurry solids, and thickness unevenness of the electrode when the electrode mixture is applied. The inherent viscosity $\eta_i$ may be calculated by dissolving 80 mg of a polymer in 20 mL of N,N-dimethylformamide, and using an Ubbelohde viscometer in a 30°C thermostatic bath, with Formula below:

$$\eta_i = (1/C)\cdot\ln(\eta/\eta_0)$$

Here, η is the viscosity of the polymer solution, no is the viscosity of N,N-dimethylformamide (solvent), and C is 0.4 g/dL.

The acrylic polymer according to the present embodiment is a polymer having a structural unit derived from a monomer represented by Formula (1) below:

[Chem. 4]

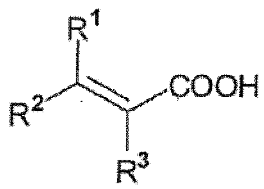

・・・ (1)

In Formula (1), $R^1$, $R^2$, and $R^3$ are each independently a hydrogen atom, a chlorine atom, a fluorine atom, an alkyl group having 1 to 6 carbon atoms, or a fluorine-substituted alkyl group having 1 to 6 carbon atoms. In consideration of the impact on environmental loads, a halogen atom is preferably not used, and a hydrogen atom or an alkyl group having 1 to 6 carbon atoms is preferable. Furthermore, from the viewpoint of polymerization reactivity, $R^1$, $R^2$, and $R^3$ are preferably alkyl groups having 1 to 3 carbon atoms, and more preferably hydrogen atoms or methyl groups.

The acrylic polymer of the present embodiment can be any of the copolymers having a polymer with only a structural unit derived from a monomer represented by Formula (1), and a monomer that is copolymerizable with a monomer represented by Formula (1). In addition, in a polymer having only a structural unit derived from a monomer represented by Formula (1), all of the structural units are not limited to homopolymers that are the same, but may be copolymers formed from different types of monomers represented by Formula (1). Examples of monomers that are copolymerizable with the monomers represented by Formula (1) include (meth)acrylic acid and alkyl (meth)acrylate compounds represented by methyl(meth)acrylate.

The proportion of the structural units derived from the monomer represented by Formula (1) in the acrylic polymer is preferably 60 mol% or greater, more preferably 75 mol% or greater, and even more preferably 90 mol% or greater. The most preferred aspect of the acrylic polymer in the present embodiment is polyacrylic acid, which is a homopolymer of acrylic acid.

A method of preparing the acrylic polymer by polymerizing the monomer represented by Formula (1) can be easily understood by a person skilled in the art with reference to known methods. In addition, commercially available acrylic polymers such as polyacrylic acid may also be used.

The proportion of the acrylic polymer of the present embodiment in the entire polymer contained in the binder composition is preferably 5% by weight or more, and more preferably 10% by weight or greater. By setting the content of the acrylic polymer in the binder composition to be within the ranges described above, it is possible to suitably obtain an effect of suppressing changes in the solid content in the electrode mixture slurry. Note that, the changes in the solid content when stored for a certain period of time can be evaluated by the ratio between the concentration of solid content in the electrode mixture slurry before storage and the concentration of solid content in the electrode mixture slurry collected from the bottom portion of the container after being stored for a certain period of time in a predetermined container.

The binder composition according to the present embodiment may contain other vinylidene fluoride polymers as long as the required effects are not impaired. Examples of other vinylidene fluoride polymers that can be contained in the binder composition include a vinylidene fluoride homopolymer, and vinylidene fluoride copolymers of vinylidene fluoride and other monomers that can be copolymerized with vinylidene fluoride. Note that, other monomers herein are monomers not containing a polar group. Examples of such other monomers include a fluorine-based monomer copolymerizable with vinylidene fluoride, a hydrocarbon monomer such as ethylene and propylene, and an alkyl (meth)acrylate compound.

Furthermore, taking into consideration the environmental loads, it is desirable that the amount of chlorine in the binder composition according to the present embodiment is low, and specifically, the amount is preferably 1000 ppm or lower, more preferably 500 ppm or lower, and particularly preferably 300 ppm or lower.

The amount of chlorine in the binder composition can be determined in accordance with JIS K 7229 by burning the binder composition under an oxygen atmosphere in a flask, absorbing the generated combustion gas into an absorption liquid, and subjecting the liquid to an ion chromatograph to calculate the chlorine concentration by the calibration curve method.

Electrode active material

The electrode active material used in the present embodiment contains a lithium metal oxide represented by Formula (2) below.

$$Li_{1+x}MO_2 \ldots \qquad (2)$$

In Formula (2), X is a number satisfying $-0.15 < X \leq 0.15$.

M is Ni or a group of elements including two or more elements that include Ni. In a case where M is a group of elements including two or more elements that include Ni, examples of those elements for M other than Ni include Co, Mn, Ti, Cr, Fe, Cu, Zn, Al, Ge, Sn, Mg, Ag, Ta, Nb, B, P, Zr, Ca, Sr, and Ba. Among these, Co, Mn, and Al are preferable. In a case where M is a group of elements including two or more elements that include Ni, the elements for M, other than Ni, may be only one element, or two or more elements. The inclusion of Ni in the lithium metal oxide is preferable in that the capacity of the secondary battery can be enhanced by increasing the capacitance density. Furthermore, the inclusion of Co and the like in the lithium metal oxide in addition to Ni is preferable because changes in the crystal structure during the charging and discharging process are prevented, thereby stable cycle characteristics are exhibited.

Ni in the lithium metal oxide represented by Formula (2) is a component that contributes to the improvement in capacity in the electrode active material. Therefore, in the case where M is a group of elements including two or more elements that include Ni, when the total number of elements constituting M is 100 mol%, the proportion of Ni is preferably 50 mol% or more, preferably greater than 50 mol%, more preferably 55 mol% or greater, and even more preferably 60 mol% or greater. There is no upper limit on the proportion of Ni in the case where M is a group of elements including two or more elements that include Ni.

Examples of particularly preferred lithium metal oxides in the present embodiment include a binary lithium metal oxide represented by Formula (4) below:

$$LiNi_{Y1}N1_{Y2}O_2 \ldots \qquad (4)$$

(in Formula (4), N1 represents Co or Mn, where relations of $0.5 \leq Y1 < 1$ and $0 < Y2 \leq 0.5$ are satisfied), or a ternary lithium metal oxide represented by Formula (5) below:

$$LiNi_{Y1}Co_{Y2}N2_{Y3}O_2 \ldots \qquad (5)$$

(in Formula (5), N2 represents Mn or Al, where relations of $0.5 \leq Y1 < 1$, $0 < Y2 < 0.5$, $0 < Y3 < 0.5$, and $Y1/(Y1 + Y2 + Y3) \geq 0.5$ are satisfied).

A ternary lithium metal oxide has a high charging potential and excellent cycle characteristics, and thus a ternary lithium metal oxide is particularly preferably used as the electrode active material in the present embodiment.

The composition of the binary lithium metal oxide used in the present embodiment is not particularly limited, and examples of the composition thereof include $Li_{1.0}Ni_{0.8}Co_{0.2}O_2$.

In addition, the composition of the ternary lithium metal oxide according to the present embodiment is not particularly limited, and the composition thereof is exemplified by $Li_{1.00}Ni_{0.52}Co_{0.20}Mn_{0.30}O_2$ (NCM523), $Li_{100}Ni_{0.6}Co_{0.2}Mn_{0.2}O_2$(NCM622), $Li_{1.00}Ni_{0.83}Co_{0.12}Mn_{0.05}O_2$(NCM811), and $Li_{1.00}Ni_{0.85}Co_{0.15}Al_{0.05}O_2$ (NCA811).

Furthermore, the electrode active material used in the present embodiment may include a plurality of different types of lithium metal oxides, and for example, may include a plurality of $LiNi_{Y1}Co_{Y2}Mn_{Y3}O_2$ of different compositions, or may include $LiNi_{Y1}Co_{Y2}Mn_{Y3}O_2$, and $LiNi_{Y1}Co_{Y2}Al_{Y3}O_2$.

Furthermore, in the lithium metal oxide according to the present embodiment, 49 g of ultrapure water is added to 1 g of lithium metal oxide, and after stirring for 10 minutes, pH of the water when measuring the pH of the water is more preferably greater than 11.3. The upper limit of the pH of the water is not particularly limited.

Note that in the present embodiment, the electrode active material may also include, for example, impurities, and additives in addition to the lithium metal oxide represented by Formula (2). Moreover, the types of impurities, additives and the like included in the electrode active material are not particularly limited.

Solvent

The electrode mixture of the present embodiment may include a solvent. The solvent can be water or a non-aqueous solvent. Examples of the non-aqueous solvent include N-methyl-2-pyrrolidone, N,N-dimethylformamide, N,N-dimethylacetamide, dimethyl sulfoxide, N,N-dimethyl sulfoxide, hexamethylphosphoramide, dioxane, tetrahydrofuran,

tetramethylurea, triethyl phosphate, trimethyl phosphate, acetone, cyclohexanone, methyl ethyl ketone, and tetrahydrofuran. One or more types of these solvents may be included in the electrode mixture. The solvent may be added to the binder composition or may be added separately from the binder composition.

Other components

The electrode mixture of the present embodiment may include other components as necessary. Examples of the other components include a conductive agent and a pigment dispersant.

The conductive agent is added for the purpose of improving the conductivity of the electrode mixture layer formed with the electrode mixture. Examples of the conductive agent include graphites such as natural graphite (scaly graphite, etc.), artificial graphite, fine graphite powder, and graphite fiber; carbon blacks such as acetylene black, Ketjen black, channel black, and furnace black; and carbon materials such as carbon fibers and carbon nanotubes. Other examples include conductive fibers such as metal fibers of Ni, Al and the like; metal powders; conductive metal oxides; and organic conductive materials.

In addition, examples of the pigment dispersant include polyvinylpyrrolidone.

In the present embodiment, the contents of the above-described other components is from 0 to 10 parts by weight and preferably from 0 to 5 parts by weight per 100 parts by weight of the electrode mixture.

As described above, since the electrode mixture of the present embodiment includes an acrylic polymer, settling of the solid content during storage can be suppressed even in a case where the electrode mixture slurry is stored for a relatively long period of time. With this, it is possible to prevent the electrode mixture slurry from being thickened, avoiding a deterioration of handleability when producing the electrode. Furthermore, in the electrode mixture of the present embodiment, gelling of the electrode mixture slurry can be suppressed even in a case of using an electrode active material having a high nickel content. Particularly, even in a case of storage for a relatively long period of time, gelling of the electrode mixture slurry will be suppressed.

Method of producing electrode mixture

The electrode mixture of the present embodiment can be produced by kneading a vinylidene fluoride copolymer, an acrylic polymer, and an electrode active material. In the producing an electrode mixture, solvents and other components may be kneaded as necessary, and the method is not particularly limited. Furthermore, the order in which the various components are added when kneading is not particularly limited. Moreover, in a case where the solvent is added, the electrode active material and the solvent may be stirred and mixed in advance, and then the vinylidene fluoride copolymer and the acrylic polymer may be added. Alternatively, a vinylidene fluoride copolymer solution and an acrylic polymer solution may be added to the electrode active material. Alternatively, a polymer solution containing both a vinylidene fluoride copolymer and an acrylic polymer may be prepared, and the polymer solution may be added to the electrode active material.

Slurry viscosity of electrode mixture

In a case where the electrode mixture of an embodiment of the present invention is used, it is possible to determine, through the slurry viscosity of the electrode mixture, to what extent gelling of the electrode mixture slurry can be suppressed. Note that in the present specification, "gelling" indicates a state in which the electrode mixture slurry does not become a uniform paste-like mixture and a solid material is present, a slurry viscosity cannot be measured when, for example, the electrode mixture slurry is stored for 96 hours at 40°C in a nitrogen atmosphere, and then subsequently stirred for 30 seconds using a mixer. Note that solid material refers to substances that remain on top of a mesh after the slurry is passed through a mesh having an aperture of 2.36 mm and then left to stand for one hour. Furthermore, the mixer is not particularly limited; for example, ARE310 (rotation 800 rpm, revolution 2000 rpm) available from THINKY CORPORATION can be used.

Electrode structure

Next, an embodiment of an electrode structure formed with the electrode mixture of an embodiment of the present invention will be described with reference to FIG. 1. FIG. 1 is a cross-sectional view of an electrode structure according to an embodiment of the present invention.

As illustrated in FIG. 1, an electrode structure 10 includes a current collector 11, and electrode mixture layers 12a and 12b.

The current collector 11 is a substrate of the electrode structure 10 and is a terminal for producing electricity. Examples of materials for the current collector 11 include iron, stainless steel, steel, aluminum, nickel, and titanium. The

shape of the current collector 11 is preferably a foil or a mesh. In the present embodiment, the current collector 11 is preferably an aluminum foil.

The thickness of the current collector 11 is preferably from 5 to 100 μm, and preferably from 5 to 20 μm.

The electrode mixture layers 12a and 12b are layers formed with the electrode mixture of the present embodiment. The thickness of the electrode mixture layers 12a and 12b is from 10 μm to 1000 μm, more preferably from 20 to 250 μm, and even more preferably from 20 to 150 μm.

When the electrode mixture layer in the present embodiment is extracted at ordinary temperature (25°C) by an extraction method defined by JIS K 5101-16-2, the pH of the water is preferably 11 or higher. Specifically, the method of measuring the pH is conducted in the same manner as in the method of measuring the pH of the lithium metal oxide described above,

except that the electrode mixture layer is peeled from the current collector foil and is used as a sample.

Note that the electrode structure 10 includes the electrode mixture layers 12a, 12b formed on the upper and lower surfaces of the current collector 11 as illustrated in FIG. 1, but the electrode structure 10 is not limited thereto, and may be an electrode structure in which an electrode mixture layer is formed on only one side of either side of the current collector 11, that is, an electrode structure in which any one of the electrode mixture layers 12a and 12b is formed.

The electrode structure 10 can be used, for example, as a positive electrode of a lithium secondary battery.

Next, a method of producing an electrode structure will be described.

The electrode structure 10 of the present embodiment can be obtained through a step of applying and drying an electrode mixture in a slurry state (hereinafter, also referred to as an "electrode mixture slurry") including a vinylidene fluoride copolymer, an acrylic polymer, a lithium metal oxide; and a solvent, onto a surface of the current collector 11 to form a coating film on the surface of the current collector 11, and a step of heat treating the coating film.

A known method can be used as the method for applying the electrode mixture slurry, and examples include a bar coater, a die coater, or a comma coater (trade name).

The drying temperature when drying the electrode mixture slurry applied to the upper and lower surfaces of the current collector 11 can be from 50 to 170°C, and preferably from 50 to 150°C.

Note that in the present embodiment, a method of forming the electrode mixture layer by applying the electrode mixture slurry onto the upper and lower surfaces of the current collector 11 was described. However, the method of producing the electrode structure of the present embodiment is not limited thereto, and the electrode mixture may be applied to at least one side of the current collector.

Secondary battery

The secondary battery of the present embodiment is a non-aqueous electrolyte secondary battery including the electrode structure of the present embodiment. The secondary battery of the present embodiment will be described with reference to FIG. 2. FIG. 2 is an exploded perspective view of a secondary battery according to the present embodiment.

As illustrated in FIG. 2, a secondary battery 100 has a structure in which an electricity-generating element, obtained by disposing and stacking a separator 3 between a positive electrode 1 and a negative electrode 2, and then winding the laminate structure into a spiral shape, is housed in a metal casing 5. The positive electrode 1 corresponds to the electrode structure 10 of FIG. 1.

A known material such as a porous film of a polymeric material such as polypropylene or polyethylene may be used as the separator 3. In addition, as the members used in the secondary battery 100, those members which are ordinarily used in the present field can be used as appropriate.

The secondary battery 100 is a cylindrical battery, but of course the secondary battery 100 of an embodiment of the present invention is not limited thereto, and for example, may be a secondary battery having another shape such as a coin shape, a square shape, or a paper shape.

**SUMMARY**

As described above, the electrode mixture of the present invention includes an electrode active material provided on a current collector, and a binder composition for binding the electrode active material to the current collector, The binder composition includes a vinylidene fluoride copolymer having a polar group and an acrylic polymer having a structural unit derived from a monomer represented by Formula (1) above, wherein the electrode active material includes a lithium metal oxide represented by Formula (2) below:

$$Li_{1+x}MO_2 \ldots \qquad (2)$$

(where X is a number satisfying $-0.15 < X \leq 0.15$, M is Ni or a group of elements including two or more elements that

include Ni, and when M is a group of elements including two or more elements that include Ni, M contains 50 mol% or greater of Ni).

Furthermore, the polar group of the electrode mixture of the present invention is preferably a carboxyl group.

In addition, in the electrode mixture of the present invention, the vinylidene fluoride copolymer preferably contains a structural unit derived from vinylidene fluoride and a structural unit derived from a monomer represented by Formula (3) above.

In addition, the electrode mixture of the present invention preferably has a chlorine content of 1000 ppm or less in the binder composition.

In one aspect of the electrode mixture of the present invention, the binder composition contains a vinylidene fluoride polymer different from the above vinylidene fluoride copolymer.

The electrode mixture of the present invention preferably contains a solvent.

The method of producing an electrode mixture of the present invention includes kneading a vinylidene fluoride copolymer, an acrylic polymer, and an electrode active material, the vinylidene fluoride copolymer having a polar group, the acrylic polymer having a structural unit derived from a monomer represented by Formula (1) above, and the electrode active material including a lithium metal oxide represented by Formula (2) below:

$$Li_{1+x}MO_2 \ldots \qquad (2)$$

(where X is a number satisfying -0.15 < X ≤ 0.15, M is Ni or a group of elements including two or more elements that include Ni, and when M is a group of elements including two or more elements that include Ni, M contains 50 mol% or more of Ni).

The electrode structure of the present invention includes a current collector and an electrode mixture layer provided on the current collector, and the electrode mixture layer is a layer formed with the electrode mixture described above.

The method of producing an electrode structure of the present invention comprises coating a surface of a current collector with the electrode mixture described above and drying to form a coating film on the surface of the current collector, and heat-treating the coating film.

The secondary battery according of the present invention includes the electrode structure described above.

Embodiments of the present invention will be described in further detail hereinafter using examples. The present invention is not limited to the examples below, and it goes without saying that various aspects are possible with regard to the details thereof. Furthermore, the present invention is not limited to the embodiments described above, and various modifications are possible within the scope indicated in the claims. Embodiments obtained by appropriately combining the technical means disclosed by the embodiments are also included in the technical scope of the present invention. In addition, all of the documents described in the present specification are herein incorporated by reference.

## Examples

As described below, an electrode mixture and an electrode structure were produced using various binder compositions, and a test for checking sedimentation of the electrode mixture slurry and a test for slurry viscosity were measured. Prior to the descriptions of the specific examples, methods of measuring inherent viscosity, measuring slurry viscosity, and testing for changes in the solid content concentration are described.

### pH measurement of lithium metal oxide

The pH of the lithium metal oxide as the electrode active material was set as the pH of water when the lithium metal oxide was extracted with water at ordinary temperature (25°C). Extraction of the lithium metal oxide into water was performed by the extraction method defined by JIS K 5101-16-2. More specifically, the lithium metal oxide was placed in ultra pure water of an amount that was 50-times the weight of the lithium metal oxide, and stirred the mixture for 10 minutes using a magnetic stirrer with a rotation speed of 600 rpm, and then the pH of the solution thereof was measured using a pH meter MODEL: F-21 available from Horiba Ltd.

### Calculating inherent viscosity $\eta_i$

To calculate the inherent viscosity $\eta_i$, a polymer solution was produced by dissolving 80 mg of a polymer in 20 mL of N,N-dimethylformamide. The viscosity $\eta$ of this polymer solution was measured using an Ubbelohde viscometer in a constant-temperature bath at 30°C. The inherent viscosity $\eta_i$ was then determined by the following equation using the viscosity $\eta$.

$$\eta_i = (1/C) \cdot \ln(\eta/\eta_0)$$

Here, $\eta$ is the viscosity of the polymer solution, no is the viscosity of N,N-dimethylformamide (solvent), and C is 0.4 g/dL.

Measuring slurry viscosity

The slurry viscosity of the electrode mixture was measured by an E-type viscometer RE-550 MODEL: R, RC-550, available from TOKI SANGYO CO., LTD. at 25°C with a shear rate of 2 $s^{-1}$. Note that the viscosity was measured by loading the slurry onto a measuring device, waiting for 60 seconds, and then rotating the rotor. In addition, a value obtained after 300 seconds from the startup of rotation of the rotor was used as the initial slurry viscosity. The slurry viscosity after storage under a nitrogen atmosphere at 25°C for a predetermined period of time (1 day, 6 days, or 9 days) was measured and the measurement result was set as the slurry viscosity after storage.

Measuring solid content concentration change

The produced electrode mixture slurry was poured into a polypropylene tube ($\varphi$12 × 75 mm) up to a height of 5 cm from the bottom of the tube, and stored in an environment of 25°C, 20% RH for 4 days. After storage, the electrode mixture slurry was sampled from the bottom of the tube up to a height of 1 cm, weighed into an aluminum cup, and the weight of the collected electrode mixture slurry was measured. The aluminum cup was heated at 110°C for 2 hours to remove the solvent, and then weighed to measure the solid content of the sampled electrode mixture slurry. The lower-part solid content concentration ($NV_A$) was calculated from the weight before and after drying. The ratio ($NV_A/NV_B$) of the lower-part solid content concentration ($NV_A$) to the initial solid content concentration ($NV_B$) of the charged electrode mixture slurry was calculated as an index value. The larger the value of $NV_A/NV_B$ is, the easier the electrode active material is to sink and accumulate in the bottom portion of the container during storage.

Structural unit amounts of vinylidene fluoride and comonomer

The $^1H$ NMR spectrum of the polymer powder was determined under the following conditions.

Instrument: AVANCE AC 400FT NMR spectrometer available from Bruker Corp.

Measurement conditions
Frequency: 400 MHz
Measurement solvent: DMSO-d6
Measurement temperature: 25°C

The amount of structural units derived from the vinylidene fluoride of the polymer, and the amount of structural units derived from the comonomer were calculated from the $^1H$ NMR spectrum. Specifically, the amounts of the structural units were calculated on the basis of an integrated intensity of a signal derived mainly from the comonomer and signals at 2.24 ppm and 2.87 ppm derived mainly from vinylidene fluoride.

[Example 1]

Preparation of binder composition

An autoclave with an internal capacity of 2 liters was charged with 1096 g of ion-exchanged water, 0.2 g of Metolose 90SH-100 (available from Shin-Etsu Chemical Co., Ltd.), 2.2 g of a 50 wt.% diisopropyl peroxy dicarbonate-freon 225cb solution, 426 g of vinylidene fluoride, and an initial addition amount of 0.2 g of acryloyloxy propyl succinate, and the temperature was increased to 26°C over 1 hour. Subsequently, a 6 wt.% acryloyloxy propyl succinate aqueous solution was gradually added at a rate of 0.5 g/minute while the temperature was maintained at 26°C. The obtained polymer slurry was dehydrated and dried to obtain a vinylidene fluoride copolymer (VDF/APS). A total of 4.0 g of acryloyloxy propyl succinate was added, including the amount added initially.

Preparation of electrode mixture

Carbon black as a conductive agent was added to NCA811, which is the electrode active material, and powder mixing was performed. On the other hand, vinylidene fluoride copolymer (VDF/APS) and polyacrylic acid (available from Wako Pure Chemical Industries, Ltd., Wako first class, average molecular weight 25000) were dissolved in N-methyl-2

pyrrolidone (hereinafter NMP) to produce a polymer solution with a concentration of 6% by weight. The polymer solution was added in two portions to the mixture of NCA811 and carbon black and kneaded. Specifically, the polymer solution was added so that the solid content concentration became 84.2% by weight in the measurement of the solid content concentration change and the solid content concentration became 81.5% by weight in the measurement of the viscosity change of the slurry, and then, first kneading was performed at 2000 rpm for 2 minutes. Then, the remaining polymer solution was added so that the solid content concentration became 72.0% by weight in the measurement of the solid content concentration change and the solid content concentration became 75% by weight in the measurement of the viscosity change of the slurry, and then, second kneading was performed at 2000 rpm for 3 minutes to obtain an electrode mixture. The weight ratio of the electrode active material, the carbon black, and the polymer (the total amount of vinylidene fluoride copolymer and polyacrylic acid) in the obtained electrode mixture is 100:2:1 in the measurement of the solid content concentration change in this order, and 100:2:2 in the measurement of the viscosity change of the slurry in this order. In addition, the blend ratio of vinylidene fluoride copolymer (VDF/APS) and polyacrylic acid is 9:1 in terms of weight ratio.

Production of electrode structure

The obtained electrode mixture was applied to an aluminum foil with a thickness of 15 μm using a bar coater, which was heated and dried at 110°C for 30 minutes and at 130°C for 2 hours to produce an electrode structure with an amount of electrode mixture in a dry state of approximately 200 $g/m^2$.

Measuring solid content concentration change and slurry viscosity change

With respect to the obtained electrode mixture, the solid content concentration change of the slurry was measured. The results are shown in Table 1. In addition, with respect to the obtained electrode mixture, the slurry viscosity was measured, and the viscosity change after storage was checked. The results are shown in Table 2.

[Example 2]

The solid content concentration change of the slurry and the slurry viscosity were measured by preparing the electrode mixture in the same manner as in Example 1 except that polyacrylic acid (available from Wako Pure Chemical Industries, Ltd., Wako first class, average molecular weight 5000) was used.

[Example 3]

The solid content concentration change of the slurry and the slurry viscosity were measured by preparing the electrode mixture in the same manner as in Example 1 except that the vinylidene fluoride copolymer (VDF/APS) was changed to the copolymer of vinylidene fluoride and monomethyl maleate (VDF/MMM).

The vinylidene fluoride copolymer (VDF/MMM) was prepared as follows. Amounts of 1040 g of ion-exchanged water as a dispersion medium, 0.8 g of methyl cellulose, 2 g of diisopropyl peroxy dicarbonate, 396 g of vinylidene fluoride, and 4 g of monomethyl maleate (vinylidene fluoride:monomethyl maleate = 100:1.01) were added to an autoclave with an internal volume of 2 liters, and suspension polymerization was performed at 28°C. After polymerization was completed, the obtained polymer slurry was dehydrated and then dried at 80°C for 20 hours to obtain a vinylidene fluoride copolymer (VDF/MMM).

[Example 4]

The solid content concentration change of the slurry and the slurry viscosity were measured by preparing the electrode mixture in the same manner as in Example 2 except that NCM523 was used as the electrode active material.

[Comparative Example 1]

The solid content concentration change of the slurry and the slurry viscosity were measured by preparing the electrode mixture in the same manner as in Example 1 except that only vinylidene fluoride copolymer (VDF/APS) was used without mixing the polyacrylic acid.

[Comparative Example 2]

The solid content concentration change of the slurry and the slurry viscosity were measured by preparing the

electrode mixture in the same manner as in Example 1 except that only vinylidene fluoride copolymer (VDF/APS) was used without mixing polyacrylic acid and the electrode active material was changed to NCM523.

Comparative Example 3

The solid content concentration change of the slurry and the slurry viscosity were measured by preparing the electrode mixture in the same manner as in Example 1 except that the polyacrylic acid was changed to polyvinyl alcohol (PVA).

Comparative Example 4

The solid content concentration change of the slurry and the slurry viscosity were measured by preparing the electrode mixture in the same manner as in Example 1 except that the polyacrylic acid was changed to a vinylidene fluoride copolymer (VDF/CTFE), which is a copolymer of vinylidene fluoride and chlorotrifluoroethylene. The weight ratio of the vinylidene fluoride copolymer (VDF/APS) to the vinylidene fluoride copolymer (VDF/CTFE) is 5:5.

The vinylidene fluoride copolymer (VDF/CTFE) was prepared as follows. Amounts of 1040 g of ion-exchanged water, 0.4 g of methyl cellulose, 1.6 g of diisopropyl peroxy dicarbonate, 2 g of ethyl acetate, 372 g of vinylidene fluoride, and 28 g of chlorotrifluoroethylene were charged into an autoclave with an internal volume of 2 liters, and suspension polymerization was performed at 28°C. After polymerization was completed, the polymer slurry was dehydrated, the dehydrated polymer slurry was washed with water, and the polymer slurry was once again dehydrated, after which the mixture was dried for 20 hours at 80°C to obtain a vinylidene fluoride copolymer (VDF/CTFE). The inherent viscosity of the obtained vinylidene fluoride copolymer (VDF/CTFE) was 2.10 dl/g.

Table 1-1

| | Positive electrode active material | pH | | Polymer A | | |
|---|---|---|---|---|---|---|
| | | Electrode active material | Electrode mixture layer | Composition | Inherent viscosity (dL/g) | Amount of modification (mol%) |
| Example 1 | NCA811 | 11.5 | 11.4 | VDF/APS | 2.60 | 0.36 |
| Example 2 | NCA811 | 11.5 | 11.4 | VDF/APS | 2.60 | 0.36 |
| Example 3 | NCA811 | 11.5 | 11.4 | VDF/MMM | 2.60 | 0.45 |
| Example 4 | NCM523 | 11.3 | 11.3 | VDF/APS | 2.60 | 0.36 |
| Comparative Example 1 | NCA811 | 11.5 | 11.4 | VDF/APS | 2.60 | 0.36 |
| Comparative Example 2 | NCM523 | 11.3 | 11.3 | VDF/APS | 2.60 | 0.36 |
| Comparative Example 3 | NCA811 | 11.5 | 11.4 | VDF/APS | 2.60 | 0.36 |
| Comparative Example 4 | NCA811 | 11.5 | 11.5 | VDF/APS | 2.60 | 0.36 |

Table 1-2

| | Polymer B | | Polymer blend ratio A:B | Cl content of overall polymer (ppm) | $NV_A/NV_B$ |
|---|---|---|---|---|---|
| | Composition | Average molecular weight Mw | | | |
| Example 1 | PAA | 25000 | 9:1 | 0 | 1.002 |
| Example 2 | PAA | 5000 | 9:1 | 0 | 1.003 |
| Example 3 | PAA | 25000 | 9:1 | 0 | 1.007 |
| Example 4 | PAA | 5000 | 9:1 | 0 | 1.003 |

(continued)

| | Polymer B | | Polymer blend ratio A:B | Cl content of overall polymer (ppm) | $NV_A/NV_B$ |
|---|---|---|---|---|---|
| | Composition | Average molecular weight Mw | | | |
| Comparative Example 1 | - | - | 0 | 0 | 1.192 |
| Comparative Example 2 | - | - | 0 | 0 | 1.067 |
| Comparative Example 3 | PVA | 22000 | 9:1 | 0 | 13.495 |
| Comparative Example 4 | VDF/CTFE | - | 5:5 | 6250 | 1.039 |

[Table 2]

| | Initial slurry viscosity (mPas) | Slurry viscosity after storage (1 day) (mPas) | Slurry viscosity after storage (6 days) (mPas) | Slurry viscosity after storage (9 days) (mPas) |
|---|---|---|---|---|
| Example 1 | 41710 | 52030 | 62560 | 94930 |
| Example 2 | 59580 | 86190 | 42300 | 31780 |
| Comparative Example 1 | 16290 | 10330 | 127900 | Gelling |
| Comparativ e Example 2 | 53610 | 13946 | 3330 | 3300 |
| Comparativ e Example 4 | 21375 | 23726 | 34200 | 34000 |

As indicated in Table 1, in the electrode mixture including polyacrylic acid in the binder composition, changes in the solid content concentration of the slurry were suppressed even after 4 days of storage. In a case where polyvinyl alcohol having a similar structure to polyacrylic acid was used, no suppression of such changes in the solid content concentration of the slurry was observed.

As indicated in Table 2, in the electrode mixture containing polyacrylic acid in the binder composition, gelling of the electrode mixture slurry was suppressed even after 6 days or 9 days of storage.

Industrial Applicability

The present invention can be utilized for a lithium-ion secondary battery.

Reference Signs List

1 Positive electrode
2 Negative electrode
3 Separator
5 Metal casing
10 Electrode structure
11 Current collector
12a, 12b Electrode mixture layer

## Claims

1. An electrode mixture comprising an electrode active material and a binder composition, the electrode active material being provided on a current collector, and the binder composition binding the electrode active material to the current collector, wherein the binder composition comprises a vinylidene fluoride copolymer and an acrylic polymer, the vinylidene fluoride copolymer having a polar group, and the acrylic polymer having a structural unit derived from a monomer represented by Formula (1) below:

[Chem. 1]

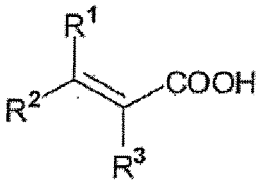

・・・ (1)

(where $R^1$, $R^2$, and $R^3$ are each independently a hydrogen atom, a chlorine atom, a fluorine atom, an alkyl group having 1 to 6 carbon atoms, or a fluorine-substituted alkyl group having 1 to 6 carbon atoms), and
the electrode active material comprises a lithium metal oxide represented by Formula (2) below:

$Li_{1+x}MO_2$ ... (2)

(where X is a number satisfying $-0.15 < X \leq 0.15$, M is Ni or a group of elements including two or more elements that include Ni, and when M is a group of elements including two or more elements that include Ni, M contains 50 mol% or greater of Ni).

2. The electrode mixture according to claim 1, wherein the polar group is a carboxyl group.

3. The electrode mixture according to claim 1 or 2,

wherein the vinylidene fluoride copolymer includes:
a structural unit derived from vinylidene fluoride; and
a structural unit derived from a monomer represented by Formula (3) below:

[Chem. 2]

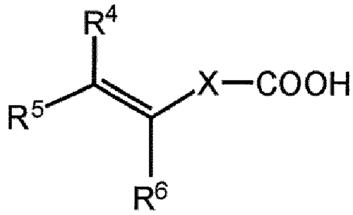

・・・ (3)

(where $R^4$, $R^5$, and $R^6$ are each independently a hydrogen atom or an alkyl group having from 1 to 5 carbon atoms, and X is an atomic group including 1 to 20 atoms in its main chain and having a molecular weight of 500 or less).

4. The electrode mixture according to any one of claims 1 to 3, wherein a chlorine content in the binder composition is 1000 ppm or less.

5. The electrode mixture according to any one of claims 1 through 4, wherein the binder composition further comprises at least one selected from the group consisting of: a vinylidene fluoride homopolymer; and a vinylidene fluoride copolymer of vinylidene fluoride and other monomer which is copolymerizable with the vinylidene fluoride and which contains no polar group.

**6.** The electrode mixture according to any one of claims 1 to 5, further comprising a solvent.

**7.** A method of producing an electrode mixture, the method comprising kneading a vinylidene fluoride copolymer, an acrylic polymer, and an electrode active material, the vinylidene fluoride copolymer having a polar group, the acrylic polymer having a structural unit derived from a monomer represented by Formula (1) below:

[Chem. 3]

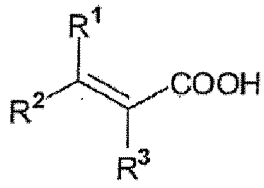

· · · (1)

(where $R^1$, $R^2$, and $R^3$ are each independently a hydrogen atom, a chlorine atom, a fluorine atom, an alkyl group having 1 to 6 carbon atoms or a fluorine-substituted alkyl group having 1 to 6 carbon atoms), and
the electrode active material being represented by Formula (2) below:

$Li_{1+x}MO_2$ ... (2)

(where X is a number satisfying $-0.15 < X \leq 0.15$, M is Ni or a group of elements including two or more elements that include Ni, and when M is a group of elements including two or more elements that include Ni, M contains 50 mol% or greater of Ni).

**8.** An electrode structure comprising:

a current collector; and
an electrode mixture layer provided on the current collector,
wherein the electrode mixture layer is a layer formed with the electrode mixture according to any one of claims 1 to 6.

**9.** A method of producing an electrode structure, the method comprising coating a surface of a current collector with the electrode mixture according to claim 6 and drying to form a coating film on the surface of the current collector, and heat-treating the coating film.

**10.** A secondary battery comprising the electrode structure according to claim 8.

**Patentansprüche**

**1.** Elektrodengemisch, umfassend ein Elektrodenaktivmaterial und eine Bindemittelzusammensetzung, wobei das Elektrodenaktivmaterial auf einem Stromabnehmer bereitgestellt wird und die Bindemittelzusammensetzung das Elektrodenaktivmaterial an den Stromabnehmer bindet, wobei die Bindemittelzusammensetzung ein Vinylidenfluoridcopolymer und ein Acrylpolymer umfasst, wobei das Vinylidenfluoridcopolymer eine polare Gruppe aufweist und das Acrylpolymer eine Struktureinheit besitzt, die von einem durch die nachstehende Formel (1) dargestellten Monomer abgeleitet wurde:

[Chem. 1]

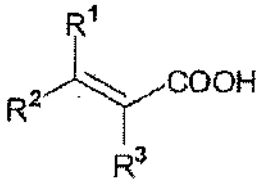

· · · (1)

(wobei $R^1$, $R^2$ und $R^3$ jeweils unabhängig voneinander ein Wasserstoffatom, ein Chloratom, ein Fluoratom, eine Alkylgruppe mit 1 bis 6 Kohlenstoffatomen oder eine fluorsubstituierte Alkylgruppe mit 1 bis 6 Kohlenstoffatomen sind), und
das Elektrodenaktivmaterial ein Lithiummetalloxid umfasst, das durch die nachstehende Formel (2) dargestellt wird:

$Li_{1+x}MO_2$... (2)

(wobei X eine Zahl ist, die $-0,15 < X \leq 0,15$ erfüllt, M Ni oder eine Gruppe von Elementen ist, die zwei oder mehr Ni einschließende Elemente einschließt, und wenn M eine Gruppe von Elementen ist, die zwei oder mehr Ni einschließende Elemente einschließen, dann enthält M zu 50 Mol-% oder mehr Ni).

**2.** Elektrodengemisch nach Anspruch 1, wobei die polare Gruppe eine Carboxylgruppe ist.

**3.** Elektrodengemisch nach Anspruch 1 oder 2,
wobei das Vinylidenfluoridcopolymer einschließt:

eine Struktureinheit, abgeleitet von Vinylidenfluorid; und
eine Struktureinheit, die abgeleitet ist von einem Monomer, das durch die nachstehende Formel (3) dargestellt wird:

[Chem. 2]

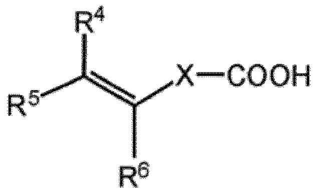

· · · (3)

(wobei $R^4$, $R^5$ und $R^6$ jeweils unabhängig voneinander ein Wasserstoffatom oder eine Alkylgruppe mit 1 bis 5 Kohlenstoffatomen sind, und X eine Atomgruppe ist, die 1 bis 20 Atome in seiner Hauptkette aufweist und ein Molekulargewicht von 500 oder weniger aufweist).

**4.** Elektrodengemisch nach einem der Ansprüche 1 bis 3, wobei ein Chlorgehalt in der Bindemittelzusammensetzung 1000 ppm oder weniger beträgt.

**5.** Elektrodengemisch nach einem der Ansprüche 1 bis 4, wobei die Bindemittelzusammensetzung ferner mindestens eines, ausgewählt aus der Gruppe bestehend aus: einem Vinylidenfluoridhomopolymer; und einem Vinylidenfluoridcopolymer aus Vinylidenfluorid und einem anderen Monomer, das mit dem Vinylidenfluorid copolymerisierbar ist und keine polare Gruppe enthält, umfasst.

**6.** Elektrodengemisch nach einem der Ansprüche 1 bis 5, ferner umfassend ein Lösemittel.

**7.** Verfahren zum Herstellen einer Elektrodengemisch, wobei das Verfahren das Kneten eines Vinylidenfluoridcopolymers, eines Acrylpolymers und eines Elektrodenaktivmaterials umfasst, wobei das Vinylidenfluoridcopolymer eine

polare Gruppe aufweist,

wobei das Acrylpolymer eine Struktureinheit aufweist, die von einem Monomer abgeleitet ist, das durch die nachstehende Formel (1) dargestellt ist:

[Chem. 3]

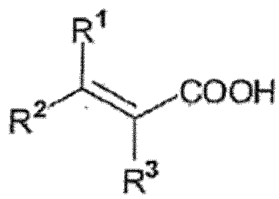

・・・ (1)

(wobei $R^1$, $R^2$ und $R^3$ jeweils unabhängig voneinander ein Wasserstoffatom, ein Chloratom, ein Fluoratom, eine Alkylgruppe mit 1 bis 6 Kohlenstoffatomen oder eine fluorsubstituierte Alkylgruppe mit 1 bis 6 Kohlenstoffatomen sind), und
wobei das Elektrodenaktivmaterial durch die nachstehende Formel (2) dargestellt ist:

$$Li_{1+x}MO_2 \ldots \qquad (2)$$

(wobei X eine Zahl ist, die $-0{,}15 < X \leq 0{,}15$ erfüllt, M Ni oder eine Gruppe von Elementen ist, die zwei oder mehr Ni einschließende Elemente einschließt, und wenn M eine Gruppe von Elementen ist, die zwei oder mehr Ni einschließende Elemente einschließen, dann enthält M zu 50 Mol-% oder mehr Ni).

**8.** Elektrodenstruktur, umfassend:

einen Stromabnehmer; und
eine Elektrodengemischschicht, die auf dem Stromabnehmer ausgebildet ist;
wobei die Elektrodengemischschicht eine Schicht ist, die mit der Bindemittelzusammensetzung nach einem der Ansprüche 1 bis 6 hergestellt wird.

**9.** Verfahren zum Herstellen einer Elektrodenstruktur, wobei das Verfahren das Beschichten einer Oberfläche eines Stromabnehmers mit der Elektrodengemisch nach Anspruch 6 und das Trocknen zum Bilden eines Beschichtungsfilms auf der Oberfläche des Stromabnehmers, und das Wärmebehandeln des Beschichtungsfilms umfasst.

**10.** Sekundärbatterie, umfassend die Elektrodenstruktur nach Anspruch 8.

## Revendications

**1.** Mélange pour électrode comprenant un matériau actif d'électrode et une composition de liant, le matériau actif d'électrode étant fourni sur un collecteur de courant, et la composition de liant effectuant la liaison du matériau actif d'électrode au collecteur de courant, dans lequel la composition de liant comprend un copolymère de fluorure de vinylidène et un polymère acrylique, le copolymère de fluorure de vinylidène ayant un groupe polaire, et le polymère acrylique ayant un motif structural dérivé d'un monomère représenté par la Formule (1) ci-dessous :

[Subst. chim. 1]

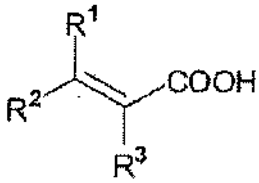

· · · (1)

(où $R^1$, $R^2$, et $R^3$ sont chacun indépendamment un atome d'hydrogène, un atome de chlore, un atome de fluor, un groupe alkyle ayant 1 à 6 atomes de carbone, ou un groupe alkyle à substitution fluor ayant 1 à 6 atomes de carbone), et

le matériau actif d'électrode comprend un oxyde de lithium-métal représenté par la Formule (2) ci-dessous :

$Li_{1+x}MO_2$... (2)

(où X est un nombre respectant $-0,15 < X \leq 0,15$, M est Ni ou un groupe d'éléments incluant deux éléments ou plus qui incluent Ni, et lorsque M est un groupe d'éléments incluant deux éléments ou plus qui incluent Ni, M contient 50 % molaires ou plus de Ni).

2. Mélange pour électrode selon la revendication 1, dans lequel le groupe polaire est un groupe carboxyle.

3. Mélange pour électrode selon la revendication 1 ou 2, dans lequel le copolymère de fluorure de vinylidène inclut :

un motif structural dérivé de fluorure de vinylidène ; et
un motif structural dérivé d'un monomère représenté par la Formule (3) ci-dessous :

[Subst. chim. 2]

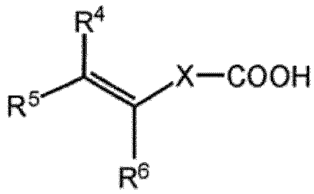

· · · (3)

(où $R^4$, $R^5$, et $R^6$ sont chacun indépendamment un atome d'hydrogène ou un groupe alkyle ayant de 1 à 5 atomes de carbone, et X est un groupe atomique incluant 1 à 20 atomes dans sa chaîne principale et ayant une masse moléculaire de 500 ou moins).

4. Mélange pour électrode selon l'une quelconque des revendications 1 à 3, dans lequel une teneur en chlore dans la composition de liant est de 1000 ppm ou moins.

5. Mélange pour électrode selon l'une quelconque des revendications 1 à 4, dans lequel la composition de liant comprend en outre au moins un choisi dans le groupe constitué de : un homopolymère fluorure de vinylidène ; et un copolymère de fluorure de vinylidène de fluorure de vinylidène et d'un autre monomère qui est copolymérisable avec le fluorure de vinylidène et qui ne contient aucun groupe polaire.

6. Mélange pour électrode selon l'une quelconque des revendications 1 à 5, comprenant en outre un solvant.

7. Procédé de production d'un mélange pour électrode, le procédé comprenant le malaxage d'un copolymère de fluorure de vinylidène, d'un polymère acrylique, et d'un matériau actif d'électrode, le copolymère de fluorure de vinylidène ayant un groupe polaire,

le polymère acrylique ayant un motif structural dérivé d'un monomère représenté par la Formule (1) ci-dessous :

[Subst. chim. 3]

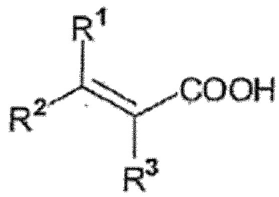

· · · (1)

(où $R^1$, $R^2$, et $R^3$ sont chacun indépendamment un atome d'hydrogène, un atome de chlore, un atome de fluor, un groupe alkyle ayant 1 à 6 atomes de carbone ou un groupe alkyle à substitution fluor ayant 1 à 6 atomes de carbone), et
le matériau actif d'électrode étant représenté par la Formule (2) ci-dessous :

$Li_{1+x}MO_2$... (2)

(où X est un nombre respectant $-0{,}15 < X \leq 0{,}15$, M est Ni ou un groupe d'éléments incluant deux éléments ou plus qui incluent Ni, et lorsque M est un groupe d'éléments incluant deux éléments ou plus qui incluent Ni, M contient 50 % molaires ou plus de Ni).

**8.** Structure d'électrode comprenant :

un collecteur de courant ; et
une couche de mélange pour électrode fournie sur le collecteur de courant,
dans laquelle la couche de mélange pour électrode est une couche formée avec le mélange pour électrode selon l'une quelconque des revendications 1 à 6.

**9.** Procédé de production d'une structure d'électrode, le procédé comprenant le revêtement d'une surface d'un collecteur de courant avec le mélange pour électrode selon la revendication 6 et le séchage pour former un film de revêtement sur la surface du collecteur de courant, et
le traitement thermique du film de revêtement.

**10.** Batterie secondaire comprenant la structure d'électrode selon la revendication 8.

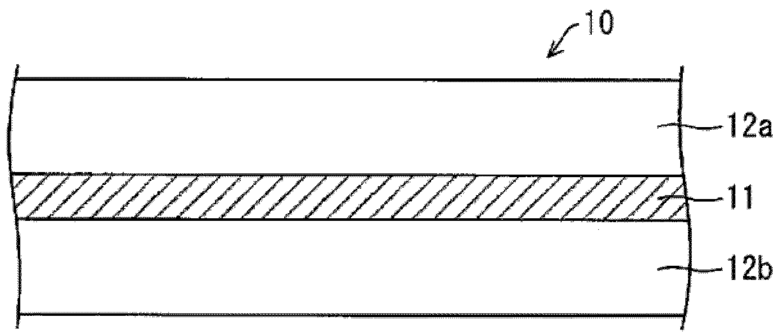


FIG. 1

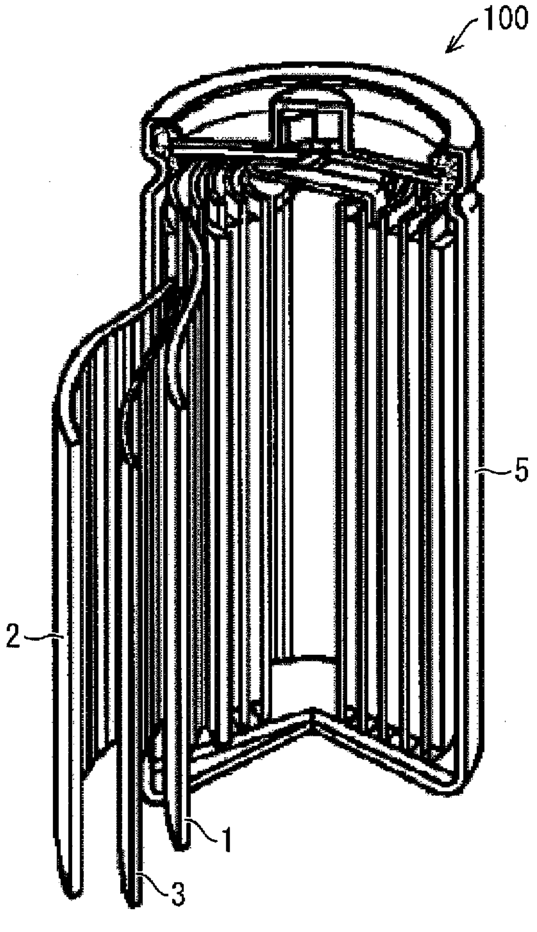


FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010074041 A
- JP 2014007088 A